# EUROPÄISCHE PATENTSCHRIFT

(11) **EP 4 448 998 B1**
(45) Veröffentlichungstag und Bekanntmachung des Hinweises auf die Patenterteilung: **06.05.2026**
(21) Anmeldenummer: 22838733.8
(22) Anmeldetag: 14.12.2022
(51) Int. Cl.: F16K 31/06, B60T 13/68, F16K 27/02

(54) **LAGERUNGSVORRICHTUNG ZUR LAGERUNG EINES ANKERKÖRPERS EINER ELEKTROMAGNETISCHEN SCHALT- ODER VENTILVORRICHTUNG SOWIE ELEKTROMAGNETISCHE SCHALT- ODER VENTILVORRICHTUNG**
BEARING DEVICE FOR BEARING AN ARMATURE BODY OF AN ELECTROMAGNETIC SWITCHING OR VALVE DEVICE, AND ELECTROMAGNETIC SWITCHING OR VALVE DEVICE
DISPOSITIF DE PALIER POUR PALIER D'UN CORPS D'INDUIT D'UN DISPOSITIF DE COMMUTATION OU DE SOUPAPE ÉLECTROMAGNÉTIQUE, ET DISPOSITIF DE COMMUTATION OU DE SOUPAPE ÉLECTROMAGNÉTIQUE

(30) Priorität: 15.12.2021 DE 102021133233
(43) Veröffentlichungstag der Anmeldung: 23.10.2024
(73) Patentinhaber: KNORR-BREMSE Systeme für Nutzfahrzeuge GmbH, 80809 München (DE)
(72) Erfinder: WÖRNER, Ralf, 75233 Tiefenbronn (DE); RÖTHER, Friedbert, 74389 Cleebronn (DE)
(86) Internationale Anmeldenummer: PCT/EP2022/085859
(87) Internationale Veröffentlichungsnummer: WO 2023/111021

(56) Entgegenhaltungen:
- EP-A2- 1 860 314
- WO-A1-03/102454
- CN-U- 2 093 285
- DE-A1- 102016 105 532
- DE-U1- 202008 012 150
- DE-U1- 202014 105 447

## Beschreibung

Die vorliegende Erfindung betrifft eine elektromagnetische Schalt- oder Ventilvorrichtung mit einer Lagerungsvorrichtung zur kraftvorgespannten Fixierung und Lagerung eines Ankerkörpers.

Solche elektromagnetische Schalt- oder Ventilvorrichtungen sind beispielsweise in Form eines elektromagnetischen Relais oder eines elektromagnetischen Magnetventils bekannt. Magnetventile, etwa in Form von Kippankerventilen, finden beispielsweise Verwendung als Steuerventil zur Druckregelung, etwa in einem Fahrzeug, wie beispielsweise in einem Nutzfahrzeug oder Bus zur Personenbeförderung. Beispielsweise umfasst ein Bremssystem für ein Fahrzeug mit einem elektronischen Betriebsbremssystem zumindest ein Steuerventil zur Druckregelung.

Ein Kippankerventil ist beispielsweise aus DE 10 2016 105 532 A1 bekannt. Das Kippankerventil weist ein Spulenelement mit einem Spulenkern und eine radial um den Spulenkern angeordnete Spule, sowie einen Anker auf, der an einer Stirnseite des Ankers mittels eines Lagers gelagert ist, wobei der Anker, insbesondere durch ein Beaufschlagen der Spule mit Strom, von einer ersten Position in eine zweite Position bewegbar ist. Weiterhin sind ein Ventilsitz mit einem Ausgang und ein Eingang für ein Fluid vorgesehen, wobei der Ausgang in der ersten Position des Ankers mittels eines Dichtelements fluiddicht verschließbar ist und der Ausgang in der zweiten Position des Ankers freigegeben ist. Gemäß einer Ausführungsform ist eine Feder vorgesehen zum Andrücken des Ankers an das Spulenelement oder ein Gehäuse des Kippankerventils.

Es sind darüber hinaus weitere Bauarten von Magnetventilen bekannt, wie beispielsweise in DE 10 2014 115 207 A1, DE 10 2018 123 997 A1, oder DE 10 2014 115 206 B3 beschrieben.

WO 03/102454 A1 betrifft ein Flüssigkeitsdurchflussregelventil, bei dem ein Anker schwenkbar in einer flüssigkeitsdichten Kammer montiert ist und die Flüssigkeitsdurchflussregelvorrichtung enthält. Er kann eine von zwei Ausgangspositionen in Kontakt mit zwei Magnetpolen (A, D, B, C) einnehmen und wird durch den magnetischen Fluss eines Permanentmagneten gehalten. Der Anker schwenkt von einer Ausgangsposition in die andere, indem der magnetische Fluss, der den Anker und die Pole (A, B, C, D) verbindet, vorübergehend geändert wird. Weiterhin werden jeweilige abwechselnd komprimierte Drückelemente mit stirnseitigen Kugeln vorgesehen, die in der Kompression abwechselnd Energie in Federelementen speichern und bei anschließendem Abstoßen des Ankers helfen sollen, dessen Beschleunigung weg von den Polen A bzw. B zu befördern.

DE 20 2014 105447 U1 betrifft ein federndes Druckstück im Einsatzbereich von Förderbahnen und deren Probleme hinsichtlich Abnutzung und Reibung, mit einem federnden Element und mit einer Lagerschale, die einen Zylindermantel und einen Boden aufweist und in der eine Kugel angeordnet ist, wobei ein Teil der Kugel aus einem offenen Ende der Lagerschale herausragt und ein der Lagerschale zugewandtes Ende des federnden Elements am Boden der Lagerschale anliegt.

EP 1 860 314 A2 betrifft eine Gaszufuhrvorrichtung, die eine schnelle und genaue Dosierung von Gas und insbesondere von Kraftstoff, insbesondere Flüssiggas, für einen Verbrennungsmotor ermöglicht und mindestens ein Magnetventil umfasst, das so gesteuert wird, dass es Gas in einen entsprechenden Zylinder des Motors leitet, wobei das Magnetventil einen Gasverteiler und mindestens eine Auslassleitung für das Brenngas umfasst, wobei eine entsprechende, von einem Anker getragene Klappe durch einen entsprechenden Elektromagneten aktiviert wird, um den Einlassverteiler mit einer Auslassleitung zu verbinden. Ein elastisches Element wirkt auf die Oberfläche des Ankers ein, um einen variablen Hebelarm als Funktion eines Ventilöffnungswinkels zu bilden.

In elektromagnetischen Schalt- oder Ventilvorrichtungen, wie den beispielhaft genannten Bauformen von Magnetventilen, sind gebräuchliche Ankerführungen und - Lagerungen meist über einen Formschluss, ein federvorgespanntes Lager oder ein festes Biegelager ausgeführt. Bei Kippanker in einem Relais werden oftmals einfache scharnierähnliche Lager angewandt, die im Montageprozess durch plastische Verformung fixiert werden. Bei Magnetventilen hingegen ist der "freifliegende" Hubanker stark verbreitet. In elektromechanischen Schaltelementen mit wenig Arbeitshub werden dünne Blattfedern fest verbunden und bewegen sich im Einsatz innerhalb ihres elastischen Bereichs. Kippanker in der Ventiltechnik sind oftmals mit federbelasteten Lagerungen ausgestattet, um spielfrei und verschleißunabhängig zu arbeiten.

Bei federvorgespannten Lagerungen ist in den überwiegenden Fällen ein Einfluss der Lagerfeder auf den Ankerkörper und damit auch auf das Schalt- oder Ventilelement vorhanden. Dieser fällt je nach Toleranz und Montage positiv, neutral oder negativ für die Funktion ins Gewicht. Speziell bei der Anwendung als Stellglied in Steuerungsund Regelkreisen ist eine hohe Wiederholgenauigkeit sowie ein über die Serienfertigung konstantes Schaltverhalten essenziell. Aus wirtschaftlichen Aspekten heraus wird hierfür oftmals eine klassische Spiralfeder verwendet. Dieses Federelement hat jedoch den Nachteil, dass der Krafteinleitungspunkt nicht mittig auf der Federmittelachse liegt, sondern durch die Herstellung bedingt immer außermittig ist. Da ein orientierter Einbau der Feder extrem aufwendig ist, ergeben sich unterschiedliche Kraftangriffspunkte. Weiterhin ist eine Federzentrierung nötig, da die Feder in den meisten Fällen nicht nur eine axiale Bewegung an einem Kippanker ausführt. Diese Zentrierung erschwert die Montage und erhöht das Ausfallrisiko durch Montagefehler.

Zudem ist eine genaue Auslegung der Feder durch die überlagerte translatorische und rotatorische Bewegung des Kippankers nicht mit den gängigen Methoden möglich. Auf die Montage hin bezogen muss bei der Verwendung von direkt wirkenden Federn auch auf die Montagerichtung Rücksicht genommen werden, da in der Regel die Lagerfeder entgegengesetzt zur Ankerhubrückstellfeder gelegen ist. Somit müssen zusätzliche Vorkehrungen getroffen werden, die das Federelement bis zur vollständigen Montage in ihrer vorgesehenen Position hält.

Der vorliegenden Erfindung liegt die Aufgabe zugrunde, eine elektromagnetische Schalt- oder Ventilvorrichtung mit einer Lagerungsvorrichtung zur kraftvorgespannten Fixierung und Lagerung eines Ankerkörpers der elektromagnetischen Schalt- oder Ventilvorrichtung anzugeben, die es bei einem relativ geringen Montageaufwand ermöglicht, die Krafteinleitung auf eine definierte Lagerungsposition am Ankerkörper festzulegen.

Die Erfindung betrifft eine elektromagnetische Schalt- oder Ventilvorrichtung mit einer Lagerungsvorrichtung gemäß den beigefügten Patentansprüchen. Vorteilhafte Aus- und Weiterbildungen der Erfindung sind in den Unteransprüchen und der nachfolgenden Beschreibung angegeben.

Insbesondere betrifft ein Aspekt der vorliegenden Erfindung eine elektromagnetische Schalt- oder Ventilvorrichtung mit einer Lagerungsvorrichtung zur kraftvorgespannten Fixierung und Lagerung eines Ankerkörpers der elektromagnetischen Schalt- oder Ventilvorrichtung, aufweisend ein Lagerkrafterzeugungselement zur Erzeugung einer Vorspannungskraft für die Lagerung des Ankerkörpers, ein vom Lagerkrafterzeugungselement separat ausgebildetes Übertragungselement, das im eingebauten Zustand der Lagerungsvorrichtung von der erzeugten Vorspannungskraft in Richtung des Ankerkörpers gedrückt wird zur Fixierung und Lagerung des Ankerkörpers, wobei das Übertragungselement eine erste Seite und eine gegenüberliegende zweite Seite aufweist, wobei die erste Seite dem Lagerkrafterzeugungselement zugewandt ist und die zweite Seite im eingebauten Zustand der Lagerungsvorrichtung dem Ankerkörper zugewandt ist und den Ankerkörper an wenigstens einem Krafteinleitungspunkt des Ankerkörpers kontaktiert derart, dass der Krafteinleitungspunkt von dem Lagerkrafterzeugungselement mechanisch entkoppelt ist, und eine Führungsvorrichtung, welche das Übertragungselement wenigstens teilweise umgibt und zur Führung und Positionierung des Übertragungselements an dem Krafteinleitungspunkt des Ankerkörpers ausgebildet ist.

Die elektromagnetische Schalt- oder Ventilvorrichtung weist darüber hinaus einen elektromagnetischen Aktuator und einen bewegbaren Ankerkörper als Schalt- bzw. Ventilelement auf, der mit dem elektromagnetischen Aktuator für eine zu aktivierende Bewegung des Ankerkörpers zusammenwirkt, wobei der Ankerkörper an einer Seite mittels der Lagerungsvorrichtung in der Schalt- oder Ventilvorrichtung fixiert und gelagert ist und durch Aktivieren des elektromagnetischen Aktuators von einer ersten Position in eine zweite Position bewegbar ist.

Mit der Erfindung kann somit bei einem relativ geringen Montageaufwand die Krafteinleitung, auch unter Verwendung unterschiedlicher Lagerkrafterzeugungselemente, wie etwa Federelementen unterschiedlicher Bauart, auf eine definierte Lagerungsposition am Ankerkörper festgelegt werden. Dies wird durch Verwendung eines erfindungsgemäßen Übertragungselements ermöglicht, das den Ankerkörper an der Lagerungsposition an wenigstens einem Krafteinleitungspunkt des Ankerkörpers kontaktiert, wobei der Krafteinleitungspunkt des Ankerkörpers durch das Übertragungselement von dem Lagerkrafterzeugungselement mechanisch entkoppelt ist.

Diese Art der Lagerkrafterzeugung für kraftvorgespannte, insbesondere federbelastete Lagerstellen kann im Grunde nach bei allen elektromagnetischen Kipp- und Klapp-Anker-Magnetventil- und Schaltvorrichtungen angewandt werden. Durch die Entkopplung mittels kraftvorgespanntem Übertragungselement ist es möglich, die Krafteinleitung auf einen definierten Punkt am Ankerkörper festzulegen. Gleichzeitig ist ein orientierter Einbau oder eine andere spezielle Ausrichtung einer Feder zur Lagerkrafterzeugung, wie einleitend beschrieben, nicht notwendig. Somit ist eine Montage der Lagerungsvorrichtung und somit der elektromagnetischen Schalt- oder Ventilvorrichtung mit einem relativ geringen Aufwand ermöglicht. Durch die geeignete Werkstoffwahl des Übertragungselements muss bei einer Federauslegung, bzw. Auswahl des Ankerwerkstoffes keine Rücksicht bezüglich Korrosion und Verschleiß genommen werden. Da auf dem Ankerkörper keine Federführung notwendig ist, wird auch eine Fehlmontage der Feder verhindert.

Gemäß einer Ausführungsform ist die elektromagnetische Schalt- oder Ventilvorrichtung derart ausgebildet, dass das Lagerkrafterzeugungselement, beispielsweise ein Federelement, vorgespannt ist, so dass das Übertragungselement von einer Oberfläche der Führungsvorrichtung abhebt. Mit anderen Worten ist die Lagerungsvorrichtung so ausgebildet, dass nach Montage der Baugruppe das Lagerkrafterzeugungselement, etwa in Form eines Federelements, zusätzlich vorgespannt wird und somit das Übertragungselement, etwa in Form einer Kugel, von der Kunststoffsitzfläche abhebt.

Gemäß einer Ausführungsform ist das Übertragungselement an der zweiten Seite derart ausgebildet ist, dass der wenigstens eine Krafteinleitungspunkt auf wenigstens einen definierten Kontaktpunkt am Ankerkörper festgelegt ist. Durch die Entkopplung mittels kraftvorgespanntem Übertragungselement ist es möglich, die Krafteinleitung auf einen genauen, vorzugsweise vordefinierten Punkt am Ankerkörper festzulegen.

Gemäß einer Ausführungsform ist das Übertragungselement an der zweiten Seite wenigstens teilweise gerundet ausgebildet. Insbesondere ist das Übertragungselement vorzugsweise wenigstens teilweise kugelförmig, insbesondere als Kugel ausgebildet. Auch kann das Übertragungselement zumindest teilweise auch zylindrisch, rechteckig oder anderweitig der Funktion angepasst geformt ausgeführt werden, um entsprechend zu den Anforderungen an das Lagerkrafterzeugungselement, etwa einer bestimmten Federelement-Bauart, und der Form des Ankerkörpers zu passen.

In einer vorteilhaften Ausführungsform kann die mechanische Entkopplung des Lagerkrafterzeugungselements zum Ankerkörper beispielsweise über eine Kugel erfolgen. Diese ist kostengünstig zu beschaffen und ist in Sachen Handhabung und Montage sehr einfach, da auf keine Orientierung geachtet werden muss. Durch die Kugelform entsteht zudem ein definierter Kontaktpunkt, der auch gewisse Anpassungseffekte zulässt. Die Kugel wird beispielsweise in eine Art Kugelführung in der Führungsvorrichtung gesetzt, die einen Kontakt der Kugel über die Toleranzlage zum Ankerkörper gewährleistet. Auf der gegenüberliegenden Seite ist beispielswiese ein Federelement, etwa eine Spiralfeder, vorgespannt positioniert.

Gemäß einer Ausführungsform weist das Lagerkrafterzeugungselement wenigstens ein Federelement auf. In einer Ausführungsform ist das wenigstens eine Federelement als eine Spiralfeder ausgebildet.

Gemäß einer Ausführungsform weist das Lagerkrafterzeugungselement wenigstens ein Federelement auf und die Führungsvorrichtung ist derart ausgebildet, dass eine Bewegung des wenigstens einen Federelements in Richtung der erzeugten Vorspannungskraft eine reine translatorische Bewegung in einer axialen Richtung der Führungsvorrichtung ist. Damit wird vorteilhaft die Bewegung des Federelements auf eine reine translatorische Bewegung in axialer Richtung der Führungsvorrichtung umgewandelt, das wiederum zu einem definierten und berechenbaren Lastfall für das Federelement führt.

Gemäß einer Ausführungsform ist die Führungsvorrichtung an der zweiten Seite des Übertragungselements verjüngt ausgebildet. Damit kann die Positionierung des Übertragungselements an einem definierten Krafteinleitungspunkt noch genauer präzisiert werden. Weiterhin kann erschwert oder verhindert werden, dass das Übertragungselement unerwünscht von der Vorspannungskraft aus der Führungsvorrichtung gedrückt wird, beispielsweise bevor oder während die Lagerungsvorrichtung in der Schalt- oder Ventilvorrichtung montiert wird. Gemäß einer Ausführungsform ist die Führungsvorrichtung zweiteilig ausgebildet. Somit ist in einem Herstellungswerkzeug keine Zwangsentformung notwendig.

Gemäß einer Ausführungsform ist die Führungsvorrichtung an der zweiten Seite des Übertragungselements derart verjüngt ausgebildet, dass das Übertragungselement gehindert ist, sich im nicht eingebauten Zustand der Lagerungsvorrichtung infolge der Vorspannungskraft aus der Führungsvorrichtung zu bewegen. Damit kann das Übertragungselement unter der Vorspannungskraft nicht aus der Führungsvorrichtung springen. Somit ist auch eine Montage einer Vorbaugruppe über Kopf möglich.

Gemäß einer Ausführungsform ist die Lagerungsvorrichtung als eine vormontierte Baugruppe ausgebildet, die in die elektromagnetische Schaltvorrichtung als Baugruppe montierbar ist. Durch die Ausbildung der Lagerungsvorrichtung als vormontierte Baugruppe, mithin geschlossene Funktionseinheit, kann beispielsweise ein Federelement vormontiert werden und es muss auf keine Montagerichtung Rücksicht genommen werden.

Gemäß einer Ausführungsform ist die elektromagnetische Schalt- oder Ventilvorrichtung als ein elektromechanisches Relais oder Magnetventil, insbesondere ein Kippankerventil, ausgebildet.

Gemäß einer Ausführungsform ist die elektromagnetische Schalt- oder Ventilvorrichtung als ein Magnetventil für ein Druckregelmodul eines Fahrzeugs ausgebildet.

Die hierin beschriebenen Ausführungsformen können nebeneinander oder auch in beliebiger Kombination miteinander angewandt werden.

Die Erfindung wird im Folgenden anhand der in der Zeichnung dargestellten Figuren, die Ausführungsformen der Erfindung darstellen, näher erläutert. Es zeigen:
- Fig. 1: eine schematische Querschnittsdarstellung eines beispielhaften Kippankerventils gemäß einem Ausführungsbeispiel einer erfindungsgemäßen elektromagnetischen Ventilvorrichtung,
- Fig. 2: eine schematische Querschnittsdarstellung einer Ausführungsform einer erfindungsgemäßen Lagerungsvorrichtung, wie sie beispielsweise in einem Kippankerventil gemäß Fig. 1 Verwendung finden kann.

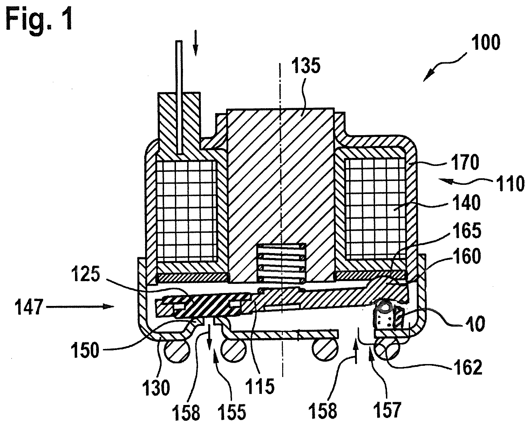

**Fig. 1** zeigt eine vereinfachte Querschnittsdarstellung eines Kippankerventils 100 gemäß einem Ausführungsbeispiel der vorliegenden Erfindung. Ausführungsformen der Erfindung werden im folgenden anhand des dargestellten Kippankerventils 100 näher beschrieben. Dem Fachmann ist jedoch bewusst, dass die Erfindung im Grunde nach auch bei anderen elektromagnetischen Schalt- oder Ventilvorrichtungen anwendbar ist, die, wie das vorliegende Kippankerventil 100, einen elektromagnetischen Aktuator und einen durch ein Magnetfeld bewegbaren Ankerkörper als Schalt- bzw. Ventilelement aufweisen, der mit dem elektromagnetischen Aktuator für eine zu aktivierende Bewegung des Ankerkörpers zusammenwirkt. Die im folgenden näher beschriebene Lagerungsvorrichtung nach Art der Erfindung kann in derartigen Schalt- oder Ventilvorrichtungen, etwa einem elektromagnetischen Relais oder Magnetventil, zur kraftvorgespannten Fixierung und Lagerung des jeweiligen Ankerkörpers dienen, wie im folgenden beispielhaft anhand des Kippankerventils 100 beschrieben. In diesem Zusammenhang wird darauf hingewiesen, dass dem Fachmann die grundlegende Funktionsweise von elektromagnetischen Schalt- oder Ventilvorrichtungen mit einem durch ein Magnetfeld bewegbaren Ankerkörper als Schalt- bzw. Ventilelement, insbesondere in Bezug auf den elektromagnetischen Aktuator im Zusammenspiel mit dem bewegbaren Ankerkörper, bekannt ist.

Bei dem Kippankerventil 100 kann es sich dem Grundprinzip nach um ein Ausführungsbeispiel eines in DE 10 2016 105 532 A1 gezeigten Kippankerventils 100 handeln. Dabei kann es sich in einer Variante um ein in der dortigen Fig. 1 mit dem Bezugszeichen 100 versehenes Magnetventil handeln. Es sind jedoch auch andere Ausführungsbeispiele denkbar, etwa in Zusammenhang mit Magnetventilen wie in den anderen oben genannten Druckschriften beschrieben. Diesbezügliche Ausgestaltungen eines in DE 10 2016 105 532 A1 beschriebenen Magnetventils und deren Komponenten sowie deren Verwendung sind durch Bezugnahme auch Teil der Offenbarung der vorliegenden Erfindung.

Die **Fig. 1** zeigt eine Querschnittsdarstellung durch das Kippankerventil 100, bei dem sich der Ankerkörper in einer ersten Position befindet. Das Kippankerventil 100 weist ein Spulenelement 110, einen Ankerkörper (oder kurz Anker) 115, eine Ausführungsform einer erfindungsgemäßen Lagerungsvorrichtung 10, ein Dichtelement 125 sowie eine Deckschale (oder allgemein Gehäuseteil) 130 auf. Dabei umfasst das Spulenelement 110 (das allgemein einen elektromagnetischen Aktuator bildet) zumindest einen Spulenkern 135 sowie eine radial um den Spulenkern 135 angeordnete Spule 140. Eine Stirnseite des Ankers 115 ist mittels der Lagerungsvorrichtung 10 gelagert. Der Anker 115 ist zwischen einer ersten Position 147 und einer zweiten, vom Spulenelement 110 aktivierten angehobenen bzw. angezogenen Position, die einen Ausgang 155 für ein Fluid 158 freigibt (in **Fig. 1** nicht dargestellt), bewegbar. Dabei ist der Anker 115 ausgebildet, bei einem Aktivieren der Spule 140 von der ersten Position 147 in die zweite angehobene Position bewegt zu werden. Bei aktivierter Spule 140 kann der Anker 115 in der zweiten Position gehalten werden. Auf der dem Spulenelement 110 abgewandten Seite des Ankers 115 ist weiterhin das Dichtelement 125 angeordnet. In der Deckschale 130 ist ein Ventilsitz 150 mit dem Ausgang 155 und ein Eingang 157 für das Fluid 158 ausgebildet. Dabei ist der Ausgang 155 mittels des Dichtelements 125 fluiddicht verschließbar, wenn der Anker 115 in der dargestellten ersten Position 147 angeordnet ist. Das Dichtelement 125 kann hierbei ferner auch als Dämpferelement wirken, um ein Aufprallen des Ankers 115 auf den Ventilsitz 150 zu verhindern. Das Dichtelement 125 kann hierbei durch ein Vulkanisieren auf dem Anker 115 oder einem Trägerelement befestigt sein.

Der Anker 115 weist in einer beispielhaften Ausführungsform eine zumindest teilweise runde Erhebung 160 in einem Lagerabschnitt 162 auf, wobei die Erhebung 160 günstigerweise in eine Ausnehmung 165 oder Öffnung eingreift, die in einem der Erhebung 160 gegenüberliegenden Abschnitt eines Gehäuses 170 des Kippankerventils 100 angeordnet ist. Hierdurch kann der Anker 115 in der Ausnehmung bei einer Bewegung von der ersten Position 147 in die zweite Position nach einem Einschalten eines Stromflusses durch die Spule 140 gleiten und wird zugleich an einer fixen Position in dem Gehäuse 170 bzw. in Bezug zu der Deckschale 130 gehalten. Günstigerweise ist die Ausnehmung trapezförmig ausgestaltet, sodass eine möglichst geringe Reibung beim Gleiten der Erhebung über die Fläche der Ausnehmung 165 verursacht wird. Die Ausnehmung 165 kann beispielsweise aus Kunststoffmaterial gefertigt und hierdurch sehr einfach und kostengünstig herstellbar sein.

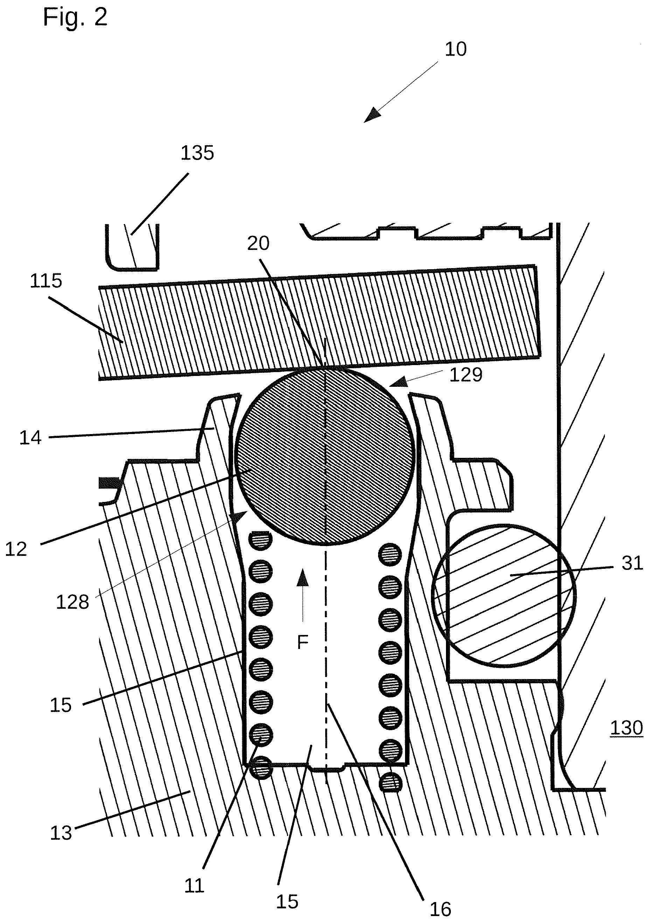

Die Lagerungsvorrichtung 10 ist auf einer der Spule 140 gegenüberliegenden Seite des Ankers 115 angeordnet. Die Lagerungsvorrichtung 10 dient hierbei zum spielfreien Andrücken des Ankers 115 an das Gehäuse 170 des Spulenelementes 110. Ein Anpressen kann, je nach Bauform, grundsätzlich auch an eine andere geeignete Komponente des Kippankerventils 100 erfolgen. Der Anker 115 kann durch die Lagerungsvorrichtung 10 fixiert werden, so dass der Anker 115 durch die Lagerungsvorrichtung 10 in einer vorbestimmten Position gehalten wird. Dies bietet den Vorteil, dass eine im wesentlichen konstante Vorspannungskraft auf den Anker 115 ausgeübt werden kann, und die von der Lagerungsvorrichtung 10 auf den Anker 115 ausgeübte Kraft möglichst nahe an einem an der Drehachse liegenden Krafteinleitungspunkt des Ankers 115 auf den Anker 115 eingeleitet werden kann. Die Lagerungsvorrichtung 10 ist in **Fig. 1** nur grobschematisch dargestellt und wird nun eingehender in Verbindung mit **Fig. 2** näher erläutert.

**Fig. 2** zeigt eine schematische Querschnittsdarstellung einer Ausführungsform einer erfindungsgemäßen Lagerungsvorrichtung 10, wie sie beispielsweise in dem Kippankerventil 100 gemäß **Fig. 1** Verwendung finden kann. Hierbei ist die Bauform von einzelnen Komponenten, beispielsweise des umgebenden Gehäuseteils 130, des Ankers 115 und des Spulenkerns 135, abgeändert, was auch verdeutlicht, dass die Lagerungsvorrichtung 10 im Grundsatz in unterschiedlichen Bauarten von elektromagnetischen Schalt- oder Ventilvorrichtungen eingesetzt werden kann.

In der dargestellten Ausführungsform ist der Anker 115, wie auch in der Ausführungsform nach **Fig. 1****,** als Plattenanker ausgebildet, wie er beispielsweise in einem Kippankerventil 100 gemäß **Fig. 1** eingesetzt wird. Der Anker 115 ist an einer Seite, im vorliegenden Ausführungsbeispiel an der Stirnseite, mittels der Lagerungsvorrichtung 10 in dem Kippankerventil 100 fixiert und gelagert und wird durch Aktivierung der Spule 140 zwischen der ersten und zweiten Position bewegt, wie in Bezug auf **Fig. 1** beschrieben.

Die Lagerungsvorrichtung 10 weist eine Führungsvorrichtung 13 auf, welche ein Übertragungselement 12 wenigstens teilweise umgibt. Ferner weist die Lagerungsvorrichtung 10 ein Lagerkrafterzeugungselement zur Erzeugung einer Vorspannungskraft F für die Lagerung des Ankers 115 auf. In einer Ausführungsform weist das Lagerkrafterzeugungselement wenigstens ein Federelement 11, etwa in Form einer Spiralfeder, auf bzw. ist als solche ausgebildet. Die Spiralfeder 11 erzeugt in der bekannten Art in einem komprimierten Zustand eine Vorspannungskraft F in der Richtung der axialen Achse 16 der Spiralfeder 11. Die Führungsvorrichtung 13 wiederum kann durch ein Dichtungselement 31, beispielsweise in Form eines O-Rings, gegenüber dem Gehäuseteil 130 festgelegt bzw. abgedichtet sein. Es können grundsätzlich analog auch andere Arten von Federelementen zur Erzeugung einer Vorspannungskraft F eingesetzt werden.

Das Übertragungselement 12 ist bevorzugt in Form einer Kugel ausgebildet, und bildet ein von dem Federelement 11 separates Bauteil, ist insbesondere nicht an das Federelement 11 angeformt oder mit diesem integriert. Das Übertragungselement 12 weist eine erste Seite 128 und eine gegenüberliegende zweite Seite 129 auf. Hierbei sind die erste Seite 128 der Spiralfeder 11 und die zweite Seite 129 dem Anker 115 zugewandt. Das Übertragungselement 12 wird von der erzeugten Vorspannungskraft F der Spiralfeder 11 in Richtung des Ankers 115 gedrückt und kontaktiert den Anker 115 an einem Krafteinleitungspunkt 20 des Ankers, und dient damit zur Fixierung und Lagerung des Ankers 115 am Kippankerventil. Das Übertragungselement 12 kontaktiert den Anker 115 an dem Krafteinleitungspunkt 20 des Ankers dabei derart, dass der Krafteinleitungspunkt 20 von der Spiralfeder 11 mechanisch entkoppelt ist. In der vorliegenden Ausführungsform ist das Übertragungselement 12 nicht am Anker 115 montiert oder mechanisch befestigt, etwa durch eine Verschraubung oder anderweitige Befestigung, sondern kontaktiert lediglich den Anker 115 und wird infolge der Vorspannungskraft F an den Anker 115 in einer Richtung quer zur Ankeroberfläche angedrückt. Auf diese Weise wird die erforderliche Lagerkraft erzeugt. Hierbei ist das Übertragungselement 12 an der zweiten Seite 129 derart geformt, beispielsweise durch eine abgerundete Form, dass der Krafteinleitungspunkt 20 auf einen definierten Kontaktpunkt am Anker 115 festgelegt ist. Die Führungsvorrichtung 13 dient dabei zur Führung und Positionierung des Übertragungselements 12 an dem Krafteinleitungspunkt 20, indem sie das Übertragungselement 12 wenigstens teilweise umgibt, beispielsweise in Form der Umrandung 14, so dass das Übertragungselement 12 durch die Führungsvorrichtung 13 in der Ebene der Ankeroberfläche bis auf ein geringes Spiel oder Toleranzlagen festgelegt ist.

Vorzugsweise ist das Übertragungselement 12 an der zweiten Seite 129 wenigstens teilweise gerundet ausgebildet, um einen genauen Krafteinleitungspunkt 20 festzulegen. Wie beschrieben, ist das Übertragungselement 12 vorzugsweise als Kugel ausgebildet, wie in **Fig. 2** dargestellt.

Die Führungsvorrichtung 13, die aus Kunststoff geformt sein kann, weist beispielsweise einen Kanal 15 auf (gebildet z.B. durch eine Vertiefung in einem Kunststoffkörper), der eine axiale Richtung der Führungsvorrichtung 13 festlegt und in dem das Übertragungselement 12 zumindest teilweise gehalten ist. In dem Kanal 15 kann sich auch, zumindest teilweise, die Spiralfeder 11 befinden, so dass die Achse 16 der Spiralfeder 11 mit der Längsachse des Kanals 15 zusammenfällt. Vorteilhaft wird auf diese Art erreicht, dass eine Bewegung der Spiralfeder 11 in Richtung der erzeugten Vorspannungskraft F eine reine translatorische Bewegung in axialer Richtung ist.

Gemäß einer Ausführungsform ist die Führungsvorrichtung 13 zumindest an der zweiten Seite 129 des Übertragungselements 12 verjüngt ausgebildet, etwa durch eine entsprechende sich verjüngende Formgebung der Umrandung 14. Dadurch ist das Übertragungselement 12 gehindert, sich im nicht eingebauten Zustand der Lagerungsvorrichtung 10 infolge der Vorspannungskraft F aus der Führungsvorrichtung 13 zu bewegen und herauszufallen. Damit ist es möglich, die Lagerungsvorrichtung 10 als Baugruppe vorzumontieren, die dann in das Kippankerventil 100 als Baugruppe auch über Kopf montierbar ist, ohne dass das Übertragungselement 12 aus der Führungsvorrichtung 13 herausfällt.

Die Lagerungsvorrichtung 10 wurde anhand von **Fig. 1** in Zusammenhang mit einem Magnetventil in Form des Kippankerventiles 100 beschrieben. Bei einem Einsatz in einer elektromagnetischen Schaltvorrichtung, etwa einem Relais, hingegen könnte der in **Fig. 2** angedeutete Anker 115 beispielsweise als elektrisches Schaltelement, welches einen elektrischen Kontakt analog einer Ventilöffnung schließt oder öffnet, eingesetzt werden. Die beschriebene Art der Lagerkrafterzeugung durch die Lagerungsvorrichtung 10 kann im Grundsatz bei allen elektromagnetischen Kipp- und Klapp-Anker-Ventilvorrichtungen und Schaltvorrichtungen angewandt werden.

Zusammenfassend wird also mit einer erfindungsgemäßen Lagerungsvorrichtung 10 der Krafteinleitungspunkt 20 am Anker 115 von dem Federelement 11 durch das Übertragungselement 12 mechanisch entkoppelt. Diese Art der Lagerkrafterzeugung für federbelastete Lagerstellen kann im Grundsatz bei allen Varianten von elektromagnetischen Kipp- und Klapp-Anker-Ventilvorrichtungen und Schaltvorrichtungen angewandt werden. Durch die Entkopplung mittels federvorgespanntem Übertragungselement 12 ist es möglich, die Krafteinleitung auf einen genauen Punkt am Anker 115 festzulegen. Weiterhin wird die Bewegung des Federelements auf eine reine translatorische Bewegung in axialer Richtung umgewandelt, was wiederum zu einem definierten und berechenbaren Lastfall für das Federelement 11 führt. Durch eine geeignete Werkstoffwahl des Übertragungselements 12 muss bei der Federauslegung bzw. Auswahl des Ankerwerkstoffes keine Rücksicht bezüglich Korrosion und Verschleiß genommen werden. Da auf dem Anker 115 keine Federführung notwendig ist, wird auch eine Fehlmontage des Federelements 11 verhindert. Durch die geschlossene Funktionseinheit kann das Federelement 11 vormontiert werden und es muss auf keine Montagerichtung Rücksicht genommen werden.

Die mechanische Entkopplung der Feder zum Anker kann beispielsweise über ein Übertragungselement 12 in Form einer Kugel erfolgen. Ein solches Bauteil ist kostengünstig zu beschaffen und ist von der Handhabung und der Montage her sehr einfach, da auf keine Orientierung geachtet werden muss. Durch die Kugelform entsteht zudem ein definierter Kontaktpunkt, der auch gewisse Anpassungseffekte zulässt. Die Kugel 12 kann in eine Art Kugelführung gesetzt werden (in der Ausführungsform der **Fig. 2** gebildet durch den Kanal 15 und die Umrandung 14 der Führungsvorrichtung 13), die einen Kontakt der Kugel 12 über die Toleranzlage zum Anker 115 gewährleistet. Auf der gegenüberliegenden Seite der Kugel kann die Spiralfeder 11 vorgespannt positioniert sein. Alternativ kann das Übertragungselement 12 auch zylindrisch, rechteckig oder anderweitig der Funktion angepasst geformt ausgeführt werden, um entsprechend zu den Anforderungen an das Federelement 11 und die Form des Ankers 115 zu passen.

Die Führungsvorrichtung 13, etwa in Form eines Kunststoffteils 13, kann auch zweiteilig hergestellt werden. Somit ist bei der Herstellung im Werkzeug keine Zwangsentformung notwendig. Die Werkzeugteilung würde dann bei einem zweiteiligen Werkzeug im Bereich des Einbauraums für das Federelement 11 liegen.

### BEZUGSZEICHENLISTE

- 10: Lagerungsvorrichtung
- 11: Lagerkrafterzeugungselement
- 12: Übertragungselement
- 13: Führungsvorrichtung
- 14: Umrandung
- 15: Kanal
- 16: Achse
- 20: Krafteinleitungspunkt
- 31: Dichtung
- 100: Kippankerventil
- 110: Spulenelement
- 115: Ankerkörper
- 125: Dichtelement
- 130: Gehäuseteil
- 135: Spulenkern
- 140: Spule
- 147: erste Position
- 150: Ventilsitz
- 155: Ausgang
- 157: Eingang
- 158: Fluid
- 160: Erhebung
- 162: Lagerabschnitt
- 165: Ausnehmung
- 170: Gehäuse

## Patentansprüche

1. Elektromagnetische Schalt- oder Ventilvorrichtung (100), aufweisend:
einen elektromagnetischen Aktuator (110),
einen bewegbaren Ankerkörper (115) als Schalt- bzw. Ventilelement, der als Plattenanker und Kippanker ausgebildet ist und mit dem elektromagnetischen Aktuator (110) für eine zu aktivierende Bewegung des Ankerkörpers (115) zusammenwirkt, und
eine Lagerungsvorrichtung (10) zur kraftvorgespannten Fixierung und Lagerung des Ankerkörpers (115), aufweisend
ein Lagerkrafterzeugungselement (11) zur Erzeugung einer Vorspannungskraft (F) für die Lagerung des Ankerkörpers (115),
ein vom Lagerkrafterzeugungselement (11) separat ausgebildetes Übertragungselement (12), das im eingebauten Zustand der Lagerungsvorrichtung (10) von der erzeugten Vorspannungskraft (F) in Richtung des Ankerkörpers (115) gedrückt wird zur Fixierung und Lagerung des Ankerkörpers (115),
wobei das Übertragungselement (12) eine erste Seite (128) und eine gegenüberliegende zweite Seite (129) aufweist, wobei die erste Seite (128) dem Lagerkrafterzeugungselement (11) zugewandt ist und die zweite Seite (129) im eingebauten Zustand der Lagerungsvorrichtung (10) dem Ankerkörper (115) zugewandt ist und den Ankerkörper (115) an wenigstens einem Krafteinleitungspunkt (20) des Ankerkörpers (115) kontaktiert derart, dass der Krafteinleitungspunkt (20) von dem Lagerkrafterzeugungselement (11) mechanisch entkoppelt ist,
eine Führungsvorrichtung (13), welche das Übertragungselement (12) wenigstens teilweise umgibt und zur Führung und Positionierung des Übertragungselements (12) an dem Krafteinleitungspunkt (20) des Ankerkörpers (115) ausgebildet ist,
wobei der Ankerkörper (115) an einer Seite mittels der Lagerungsvorrichtung (10) in der Schalt- oder Ventilvorrichtung (100) fixiert und gelagert ist und durch Aktivieren des elektromagnetischen Aktuators (110) von einer ersten Position (147) in eine zweite Position bewegbar ist und der Ankerkörper (115) an einer Stirnseite des Ankerkörpers (115) mittels der Lagerungsvorrichtung (10) in der Schalt- oder Ventilvorrichtung (100) fixiert und gelagert ist.

2. Elektromagnetische Schalt- oder Ventilvorrichtung (100) nach Anspruch 1, wobei die Lagerungsvorrichtung (10) derart ausgebildet ist, dass das Lagerkrafterzeugungselement (11) zusätzlich vorgespannt ist, so dass das Übertragungselement (12) von einer Oberfläche der Führungsvorrichtung (13) abhebt.

3. Elektromagnetische Schalt- oder Ventilvorrichtung (100) nach Anspruch 1 oder 2, bei der das Übertragungselement (12) an der zweiten Seite (129) derart ausgebildet ist, dass der wenigstens eine Krafteinleitungspunkt (20) auf wenigstens einen definierten Kontaktpunkt am Ankerkörper (115) festgelegt ist.

4. Elektromagnetische Schalt- oder Ventilvorrichtung (100) nach einem der Ansprüche 1 bis 3, bei der das Übertragungselement (12) an der zweiten Seite (129) wenigstens teilweise gerundet ausgebildet ist.

5. Elektromagnetische Schalt- oder Ventilvorrichtung (100) nach einem der Ansprüche 1 bis 4, bei der das Übertragungselement (12) wenigstens teilweise kugelförmig, insbesondere als Kugel, oder wenigstens teilweise zylindrisch oder rechteckig ausgebildet ist.

6. Elektromagnetische Schalt- oder Ventilvorrichtung (100) nach einem der Ansprüche 1 bis 5, bei der das Lagerkrafterzeugungselement wenigstens ein Federelement (11) aufweist.

7. Elektromagnetische Schalt- oder Ventilvorrichtung (100) nach Anspruch 6, bei der das wenigstens eine Federelement als eine Spiralfeder (11) ausgebildet ist.

8. Elektromagnetische Schalt- oder Ventilvorrichtung (100) nach einem der Ansprüche 1 bis 7, bei der das Lagerkrafterzeugungselement wenigstens ein Federelement (11) aufweist und die Führungsvorrichtung (13) derart ausgebildet ist, dass eine Bewegung des wenigstens einen Federelements (11) in Richtung der erzeugten Vorspannungskraft (F) eine reine translatorische Bewegung in einer axialen Richtung der Führungsvorrichtung (13) ist.

9. Elektromagnetische Schalt- oder Ventilvorrichtung (100) nach einem der Ansprüche 1 bis 8, bei der die Führungsvorrichtung (13) an der zweiten Seite (129) des Übertragungselements (12) verjüngt ausgebildet ist.

10. Elektromagnetische Schalt- oder Ventilvorrichtung (100) nach Anspruch 9, bei der die Führungsvorrichtung (13) zweiteilig ausgebildet ist.

11. Elektromagnetische Schalt- oder Ventilvorrichtung (100) nach Anspruch 9 oder 10, bei der die Führungsvorrichtung (13) an der zweiten Seite (129) des Übertragungselements (12) derart verjüngt ausgebildet ist, dass das Übertragungselement (12) gehindert ist, sich im nicht eingebauten Zustand der Lagerungsvorrichtung (10) infolge der Vorspannungskraft (F) aus der Führungsvorrichtung (13) zu bewegen.

12. Elektromagnetische Schalt- oder Ventilvorrichtung (100) nach einem der Ansprüche 1 bis 11, wobei die Lagerungsvorrichtung (10) als eine vormontierte Baugruppe ausgebildet ist, die in die elektromagnetische Schalt- oder Ventilvorrichtung (100) als Baugruppe montierbar ist.

13. Elektromagnetische Schalt- oder Ventilvorrichtung nach einem der Ansprüche 1 bis 12, die als ein elektromechanisches Relais oder Magnetventil (100) ausgebildet ist.

14. Elektromagnetische Schalt- oder Ventilvorrichtung nach Anspruch 13, die als ein Magnetventil (100) für ein Druckregelmodul eines Fahrzeugs ausgebildet ist.

## Claims

1. Electromagnetic switching or valve device (100), having:
an electromagnetic actuator (110),
a movable armature body (115) as a switching or valve element, which is formed as a plate armature and tilting armature and interacts with the electromagnetic actuator (110) for a movement of the armature body (115) that is to be activated, and
a bearing device (10) for the force-preloaded fixing and bearing of the armature body (115), having
a bearing force generating element (11) for generating a preloading force (F) for the bearing of the armature body (115),
a transmission element (12) formed separately from the bearing force generating element (11), which, when the bearing device (10) is installed, is forced in the direction of the armature body (115) by the generated preloading force (F) in order to fix and bear the armature body (115),
wherein the transmission element (12) has a first side (128) and an opposite second side (129), wherein the first side (128) faces the bearing force generating element (11) and the second side (129) faces the armature body (115) when the bearing device (10) is installed (115) and contacts the armature body (115) at at least one force introduction point (20) of the armature body (115) in such a way that the force introduction point (20) is mechanically decoupled from the bearing force generating element (11),
a guide device (13) which at least partially surrounds the transmission element (12) and is designed to guide and position the transmission element (12) on the force introduction point (20) of the armature body (115),
wherein the armature body (115) is fixed and supported in the switching or valve device (100) on one side by means of the bearing device (10) and is movable from a first position (147) to a second position by activating the electromagnetic actuator (110), and the armature body (115) is fixed and supported in the switching or valve device (100) by means of the bearing device (10) on an end face of the armature body (115).

2. Electromagnetic switching or valve device (100) according to claim 1, wherein the bearing device (10) is designed in such a way that that the bearing force generating element (11) is additionally preloaded, so that the transmission element (12) lifts off a surface of the guide device (13).

3. Electromagnetic switching or valve device (100) according to claim 1 or 2, wherein the transmission element (12) is formed on the second side (129) in such a way that the at least one force introduction point (20) is fixed at at least one defined contact point on the armature body (115).

4. Electromagnetic switching or valve device (100) according to any one of claims 1 to 3, wherein the transmission element (12) is at least partly rounded on the second side (129).

5. Electromagnetic switching or valve device (100) according to any one of claims 1 to 4, wherein the transmission element (12) is designed to be at least partly spherical, in particular formed as a ball, or at least partly cylindrical or rectangular.

6. Electromagnetic switching or valve device (100) according to any one of claims 1 to 5, wherein the bearing force generating element has at least one spring element (11).

7. Electromagnetic switching or valve device (100) according to claim 6, wherein the at least one spring element is formed as a spiral spring (11).

8. Electromagnetic switching or valve device (100) according to any one of claims 1 to 7, wherein the bearing force generating element has at least one spring element (11), and the guide device (13) is formed in such a way that a movement of the at least one spring element (11) in the direction of the generated preloading force (F) is a pure translational movement in an axial direction of the guide device (13).

9. Electromagnetic switching or valve device (100) according to any one of claims 1 to 8, wherein the guide device (13) is designed to be tapered on the second side (129) of the transmission element (12).

10. Electromagnetic switching or valve device (100) according to claim 9, wherein the guide device (13) is formed in two parts.

11. Electromagnetic switching or valve device (100) according to claim 9 or 10, wherein the guide device (13) is designed to be tapered on the second side (129) of the transmission element (12) in such a way that the transmission element (12) is prevented from moving out of the guide device (13) because of the preloading force (F) when the bearing device (10) has not been installed.

12. Electromagnetic switching or valve device (100) according to any one of claims 1 to 11, wherein the bearing device (10) is designed as a preassembled subassembly, which can be mounted in the electromagnetic switching or valve device (100) as a subassembly.

13. Electromagnetic switching or valve device according to any one of claims 1 to 12, which is designed as an electromechanical relay or solenoid valve (100).

14. Electromagnetic switching or valve device according to claim 13, which is designed as a solenoid valve (100) for a pressure regulating module of a vehicle.

## Revendications

1. Dispositif de commutation ou de soupape (100) électromagnétique présentant :
un actionneur (110) électromagnétique,
un corps d'ancrage (115) mobile comme élément de commutation ou de soupape qui est configuré comme ancrage à plaque et ancrage basculant et coagit avec l'actionneur (110) électromagnétique pour un mouvement à activer du corps d'ancrage (115) et
un dispositif d'appui (10) pour la fixation et l'appui précontraints par la force du corps d'ancrage (115) présentant
un élément de génération de force de palier (11) pour la génération d'une force de précontrainte (F) pour l'appui du corps d'ancrage (115),
un élément de transmission (12) configuré séparément de l'élément de génération de force de palier qui est pressé à l'état monté du dispositif d'appui (10) par la force de précontrainte (F) générée en direction du corps d'ancrage (115) pour la fixation et l'appui du corps d'ancrage (115),
dans lequel l'élément de transmission (12) présente un premier côté (128) et un second côté (129) opposé, dans lequel le premier côté (128) est tourné vers l'élément de génération de force de palier (11) et le second côté (129) est tourné à l'état monté du dispositif d'appui (10) vers le corps d'ancrage (115) et met en contact le corps d'ancrage (115) au niveau d'au moins un point d'introduction de force (20) du corps d'ancrage (115) de telle manière que le point d'introduction de force (20) soit découplé mécaniquement de l'élément de génération de force de palier (11),
un dispositif de guidage (13) qui entoure au moins partiellement l'élément de transmission (12) et est configuré pour le guidage et le positionnement de l'élément de transmission (12) au niveau du point d'introduction de force (20) du corps d'ancrage (115),
dans lequel le corps d'ancrage (115) est fixé et logé au niveau d'un côté au moyen du dispositif d'appui (10) dans le dispositif de commutation ou de soupape (100) et est mobile en activant l'actionneur électromagnétique (110) d'une première position (147) dans une seconde position et le corps d'ancrage (115) est fixé et logé au niveau d'un côté avant du corps d'ancrage (115) au moyen du dispositif d'appui (10) dans le dispositif de commutation ou de soupape (100).

2. Dispositif de commutation ou de soupape (100) électromagnétique selon la revendication 1, dans lequel le dispositif d'appui (10) est configuré de telle manière que l'élément de génération de force de palier (11) soit précontraint en outre de sorte que l'élément de transmission (12) se soulève d'une surface du dispositif de guidage (13).

3. Dispositif de commutation ou de soupape (100) électromagnétique selon la revendication 1 ou 2, pour lequel l'élément de transmission (12) est configuré au niveau du second côté (129) de telle manière que l'au moins un point d'introduction de force (20) soit fixé au corps d'ancrage (115) sur au moins un point de contact défini.

4. Dispositif de commutation ou de soupape (100) électromagnétique selon l'une quelconque des revendications 1 à 3, pour lequel l'élément de transmission (12) est configuré au moins partiellement arrondi sur le second côté.

5. Dispositif de commutation ou de soupape (100) électromagnétique selon l'une quelconque des revendications 1 à 4, pour lequel l'élément de transmission (12) est configuré au moins partiellement sphérique, en particulier comme sphère ou au moins partiellement cylindrique ou rectangulaire.

6. Dispositif de commutation ou de soupape (100) électromagnétique selon l'une quelconque des revendications 1 à 5, pour lequel l'élément de génération de force de palier présente au moins un élément de ressort (11).

7. Dispositif de commutation ou de soupape (100) électromagnétique selon la revendication 6, pour lequel le au moins un élément de ressort est configuré comme un ressort en spirale (11).

8. Dispositif de commutation ou de soupape (100) électromagnétique selon l'une quelconque des revendications 1 à 7, pour lequel l'élément de génération de force de palier présente au moins un élément de ressort (11), et le dispositif de guidage (13) est configuré de telle manière qu'un mouvement de l'au moins un élément de ressort (11) en direction de la force de précontrainte (F) générée soit un mouvement translatoire pur dans une direction axiale du dispositif de guidage (13).

9. Dispositif de commutation ou de soupape (100) électromagnétique selon l'une quelconque des revendications 1 à 8, pour lequel l'élément de guidage (13) est configuré rétréci sur le second côté (129) de l'élément de transmission (12).

10. Dispositif de commutation ou de soupape (100) électromagnétique selon la revendication 9, pour lequel le dispositif de guidage (13) est configuré en deux parties.

11. Dispositif de commutation ou de soupape (100) électromagnétique selon la revendication 9 ou 10, pour lequel le dispositif de guidage (13) est configuré rétréci sur le second côté (129) de l'élément de transmission (12) de telle manière que l'élément de transmission (12) soit empêché de se déplacer hors du dispositif de guidage (13) à l'état non monté du dispositif d'appui (10) à la suite de la force de précontrainte (F).

12. Dispositif de commutation ou de soupape (100) électromagnétique selon l'une quelconque des revendications 1 à 11, dans lequel le dispositif d'appui (10) est configuré comme un ensemble prémonté qui peut être monté comme ensemble dans le dispositif de commutation ou de soupape (100) électromagnétique.

13. Dispositif de commutation ou de soupape électromagnétique selon l'une quelconque des revendications 1 à 12, qui est configuré comme un relais électromagnétique ou une soupape magnétique (100).

14. Dispositif de commutation ou de soupape électromagnétique selon la revendication 13, qui est configuré comme une soupape magnétique (100) pour un module de régulation de pression d'un véhicule.
